# EUROPÄISCHE PATENTSCHRIFT

(11) **EP 2 694 832 B1**
(45) Veröffentlichungstag und Bekanntmachung des Hinweises auf die Patenterteilung: **31.05.2017**
(21) Anmeldenummer: 12715004.3
(22) Anmeldetag: 02.04.2012
(51) Int. Cl.: F16C 33/66, F16C 33/78

(54) **ÖLGESCHMIERTES WÄLZLAGER**
OIL-LUBRICATED ANTI-FRICTION BEARING
PALIER À ROULEMENT LUBRIFIÉ

(30) Priorität: 05.04.2011 DE 102011001812
(43) Veröffentlichungstag der Anmeldung: 12.02.2014
(73) Patentinhaber: ThyssenKrupp Rothe Erde GmbH, 44137 Dortmund (DE)
(72) Erfinder: PALMER, Andreas, 59590 Geseke (DE); ROLLMANN, Jörg, 59558 Lippstadt (DE)
(74) Vertreter: Loock, Jan Pieter
(86) Internationale Anmeldenummer: PCT/EP2012/055991
(87) Internationale Veröffentlichungsnummer: WO 2012/136632

(56) Entgegenhaltungen:
- WO-A2-2010/040027
- DD-A1- 236 146
- US-A1- 2004 026 867
- US-A1- 2010 247 295

## Beschreibung

Die Erfindung betrifft ein ölgeschmiertes Wälzlager für eine horizontale Anordnung der Drehachse mit einer Wellendichtung, die einen Wälzkörper aufnehmenden Lagerinnenraum von einer Lageraußenseite trennt, und mit einer von einer Lageraußenseite auf die Wellendichtung wirkenden Klemmanordnung zur axialen Fixierung der Wellendichtung. Das Wälzlager kann insbesondere als Großwälzlager ausgeführt sein, welches beispielsweise bei Windkraftanlagen zur Lagerung des Rotors eingesetzt werden kann.

Das Wälzlager umfasst einen Innenring und einen Außenring sowie dazwischen angeordnete Wälzkörper. Die Art und Anordnung der Wälzkörper ist dabei im Rahmen der Erfindung nicht eingeschränkt. Vorzugsweise ist das Wälzlager radial und axial belastbar, wozu beispielsweise schräg gegenüber der Drehachse angeordnete Kegelrollen vorgesehen sein können (DE 10 2007 049 087 A1). Das Wälzlager kann auch als Axial-Radial-Wälzlager mit separaten Lagerreihen für die axiale Lagerung einerseits und die radiale Lagerung andererseits ausgebildet sein. Ein entsprechendes Wälzlager ist aus der DE 10 2008 009 740 A1 bekannt.

Wälzlager mit den eingangs beschriebenen Merkmalen sind aus der DE 20 2005 007 904 U1 sowie der DE 10 2007 049 087 A1 bekannt. Um den mit Öl beaufschlagten Innenraum des Lagers gegen einen Ölaustritt abzudichten, sind axial geklemmte Wellendichtungen in Form von einfachen Wellendichtringen vorgesehen. Um die Abdichtung zu verbessern, sind gemäß der DE 10 2007 049 087 A1 auf jeder Stirnseite des Wälzlagers zwei Wellendichtringe hintereinander vorgesehen, die jeweils mit einem Klemmring beaufschlagt sind. Dennoch kann bei einem Dauerbetrieb ein gewisser Ölaustritt nicht verhindert werden. Eine erhebliche Leckage, die zu einer Verunreinigung der Umgebung des ölgeschmierten Wälzlagers führt, kann insbesondere bei hohen Ölfüllständen, unzureichender Belüftung oder einer Beschädigung des Welldichtringes auftreten.

Bei Wälzlagern ist es bekannt diese lediglich einmal mit Öl zu befüllen oder auch während des Betriebs mit frischem Öl zu beaufschlagen bzw. zu spülen. Ein entsprechendes Wälzlager ist aus der DD 236 146 A1 bekannt. Unabhängig von den beiden Möglichkeiten der Schmierung besteht aber das Problem, dass durch austretendes Öl die Umgebung des Wälzlagers verunreinigt wird.

Vor diesem Hintergrund liegt der Erfindung die Aufgabe zugrunde, bei einem ölgeschmierten Wälzlager eine Verunreinigung durch austretendes Öl zu vermeiden.

Ausgehend von einem ölgeschmierten Wälzlager mit den eingangs beschriebenen Merkmalen wird die Aufgabe erfindungsgemäß dadurch gelöst, dass die Klemmanordnung einen Abfluss für Öl aufweist. Der Abfluss für Öl ist bei der horizontalen Anordnung der Drehachse des Wälzlagers in einem unteren Bereich angeordnet, so dass Öl, welches ausgehend von dem Lagerinnenraum die Wellendichtung überwunden hat, alleine durch die Schwerkraft zu dem Abfluss gelangt.

Entsprechend muss das Wälzlager lagerichtig montiert werden, wozu beispielsweise an der Oberseite oder der Unterseite des Wälzlagers eine entsprechende Markierung angebracht werden kann. Um das Öl alleine aufgrund der Schwerkraft zu dem Abfluss zu leiten, ist die Drehachse im montierten Zustand vorzugsweise horizontal. Eine gewisse Verkippung gegenüber der Horizontalen ist jedoch möglich, solange der beschriebene Ablauf des Öles zu dem Abfluss gewährleistet ist.

Die Wellendichtung kann als einfacher Wellendichtring ausgebildet sein, der üblicherweise einen Trägerring und eine an der Welle bzw. einem Innenring des Lagers anliegende Dichtlippe aufweist. Auch ohne eine konstruktiv aufwändige Ausgestaltung des Wellendichtringes kann im Rahmen der Erfindung durch die Abfuhr von Öl durch den Abfluss eine Verschmutzung der Lageraußenseite vermieden werden.

Um einen kontrollierten Ablauf von Öl durch den Abfluss zu gewährleisten, weist die Klemmanordnung vorzugsweise einen Ölsammelraum auf, an den der Abfluss anschließt. Der Ölsammelraum ist dazu vorgesehen das Öl, welches ausgehend von dem Lagerinnenraum die Wellendichtung überwunden hat, aufzusammeln und zu dem Abfluss zu leiten.

Gemäß einer bevorzugten Ausgestaltung der Erfindung ist vorgesehen, dass die Klemmanordnung von einem Klemmring und Klemmschrauben gebildet ist, wobei die Klemmschrauben den Klemmring üblicherweise gegen einen Lageraußenring ziehen und damit die Wellendichtung in axialer Richtung klemmen. Dabei kann der Klemmring als Ölsammelraum eine innenliegend an die Wellendichtung anschließende Drainagenut aufweisen, die sich ausgehend von dem Abfluss für Öl zumindest um einen Teil des Innenumfangs des Klemmrings erstreckt. Da aus dem Lagerinnenraum austretendes Öl alleine aufgrund der Schwerkraft an der Klemmanordnung ohne Weiteres zu dem Abfluss fließen kann, ist eine aufwändige Abdichtung nach außen nicht erforderlich. Entsprechend kann der Klemmring auch in Umfangsrichtung in Klemmringsegmente geteilt sein, wobei jedoch die Trennfugen außerhalb des Bereiches liegen sollen, an dem der Abfluss vorgesehen ist. Der segmentierte Klemmring kann auch in beengten Verhältnissen leicht gehandhabt, montiert und demontiert werden. Gerade bei dem Einsatz an einem Großwälzlager, beispielsweise bei einer Windkraftanlage, ist dies von Vorteil. Letztlich ist auch das Gewicht bei der Handhabung einzelner Segmente deutlich reduziert, was gerade bei schwierigen Montagebedingungen besonderes vorteilhaft ist.

Erfindungsgemäß wird Öl, welches die Wellendichtung passiert, aufgefangen und durch den Abfluss abgeführt, so dass eine Verschmutzung der Lageraußenseiten, also der Stirnflächen des Wälzlagers, vermieden wird.

Für die Handhabung von solchem Leckageöl ergeben sich im Rahmen der Erfindung unterschiedliche Möglichkeiten. So ist es möglich das Leckageöl kontrolliert abzulassen, in einem Speicher oder externen Öltank zu führen oder auch zurück in den Lagerinnenraum zu leiten, wozu dann eine Transportvorrichtung in Form einer Pumpe und entsprechende Zuleitungen vorzusehen sind.

Eine Rückführung des ausgetretenen Öls ist gerade dann auf besonders einfache Weise möglich, wenn das Wälzlager unabhängig von dem Abfluss der Klemmanordnung direkt in den Lagerinnenraum mündende Ölkanäle aufweist, die üblicherweise in dem Lageraußenring gebildet sind. Derartige Ölkanäle werden in der Praxis häufig eingesetzt, um regelmäßig Öl nachzufüllen oder das Wälzlager mit Öl zu spülen. Bei einer solchen Ausgestaltung kann eine optimale Schmierung des Wälzlagers gewährleistet werden, wobei auch ein gewisser Austausch des Öls möglich ist. Wenn Öl in einem Kreislauf geführt wird, kann dieses auch nach Bedarf ausgetauscht oder zumindest mit Filtern oder dergleichen gereinigt werden.

Um Leckageöl von der Klemmanordnung wegzuführen, kann direkt in der Klemmanordnung, also vorzugsweise dem Klemmring, an der Lageraußenseite eine Öffnung des Abflusses vorgesehen sein. An diese Öffnung kann beispielsweise ein Ablassschlauch oder dergleichen angeschlossen sein. Gemäß einer alternativen Ausgestaltung der Erfindung ist der Abfluss der Klemmanordnung an einen in dem Außenring des Wälzlagers gebildeten Ablaufkanal angeschlossen. Das ablaufende Öl kann dann durch den Außenring abgeführt und insbesondere auch zu einer Stirnseite des Außenringes geführt werden.

Vorzugsweise ist an beiden Lageraußenseiten eine Wellendichtung und eine Klemmanordnung mit einem Abfluss für Öl vorgesehen.

Da Leckageöl durch den Abfluss abgeführt wird, kann eine Verschmutzung an der Lageraußenseite auch ohne aufwändige Dichtmaßnahmen vermieden werden. Eine gewisse Abdichtung zwischen dem inneren Bereich der Klemmanordnung, in dem der Abfluss angeordnet ist, sowie der Lageraußenseite ist jedoch zweckmäßig, um den Durchtritt von Verschmutzungen, beispielsweise von Staubpartikeln, zu vermeiden. Erfindungsgemäß ist eine mit der Klemmanordnung zusammenwirkende Staubschutzdichtung vorgesehen, welche den Abfluss von der Lageraußenseite trennt. Erfindungsgemäß weist die Klemmanordnung dabei einen radial umlaufenden Steg auf, wobei in axialer Richtung gesehen an beiden Seiten des Steges eine Staubschutzdichtung vorgesehen ist. Der Zwischenraum zwischen dem Steg und den beiden Staubschutzdichtungen kann auch mit einem Fett gefüllt sein.

Die Erfindung wird im folgenden anhand einer lediglich ein Ausführungsbeispiel darstellenden Zeichnung erläutert:
- **Fig. 1**: ein erfindungsgemäßes Wälzlager,

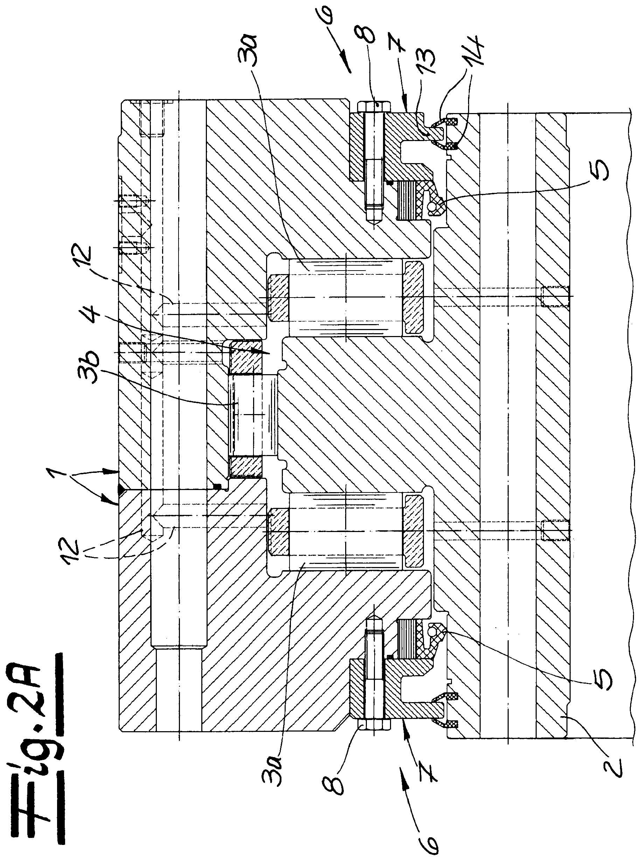

- **Fig. 2a**: den oberen Bereich des in Fig. 1 dargestellten Wälzlagers,

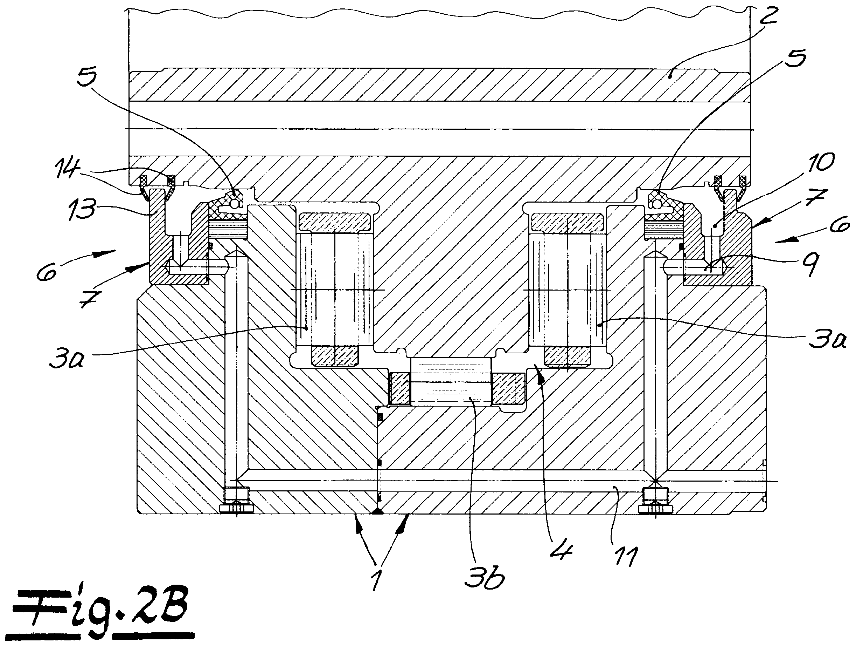

- **Fig. 2b**: den unteren Bereich des in Fig. 1 dargestellten Wälzlagers.

Die Figuren zeigen ein ölgeschmiertes Wälzlager, welches als Großwälzlager für eine horizontale Anordnung der Drehachse D vorgesehen ist. Entsprechende Großwälzlager mit einer horizontalen Drehachse D werden beispielsweise als Rotorlager an Windkraftanlagen eingesetzt. Das Wälzlager weist einen Lageraußenring 1, einen Lagerinnenring 2 sowie dazwischen angeordnete Wälzkörper 3a, 3b auf, wobei in dem dargestellten Ausführungsbeispiel exemplarisch zwei Lagerreihen mit Wälzkörpern 3a zur axialen Abstützung und eine Lagerreihe mit Wälzkörpern 3b zur radialen Abstützung vorgesehen sind. Alternativ sind aber auch andere Arten und Anordnungen der Wälzkörper, beispielsweise eine Ausgestaltung mit Kegelrollen, möglich.

Die Wälzkörper 3a, 3b sind zwischen dem Lageraußenring 1 und dem Lagerinnenring 2 in einem Lagerinnenraum 4 angeordnet, der an beiden Seiten durch jeweils eine Wellendichtung in Form eines Wellendichtringes 5 von der Lageraußenseite getrennt ist. Um den Welldichtring 5 fixieren zu können, sind an den Stirnseiten in axialer Richtung wirkende Klemmanordnungen 6 vorgesehen, die jeweils von einem Klemmring 7 und Klemmschrauben 8 gebildet sind. Auch wenn die Wellendichtringe 5 dazu vorgesehen sind den Lagerinnenraum 4 von der Lageraußenseite zu trennen, kann ein Durchtritt von Öl nicht vollständig ausgeschlossen werden, insbesondere wenn der Lagerinnenraum 4 mit zuviel Öl versehen oder unzureichend belüftet ist. Hohe Leckageverluste können auch bei einer Beschädigung des Wellendichtringes 5 auftreten.

Um an den Stirnseiten des Wälzlagers Verschmutzungen durch austretendes Öl zu vermeiden, weist der Klemmring 7 erfindungsgemäß einen Abfluss 9 für Öl auf. Das Wälzlager ist dabei so anzuordnen, dass der Abfluss 9 in einem unteren Bereich, vorzugsweise am tiefsten Punkt des Klemmringes 7 liegt.

Um Öl, welches den entsprechenden Wellendichtring 5 überwunden hat, zu dem Abfluss zu leiten, weist der Klemmring 7 eine innenliegend an den Wellendichtring 5 anschließende Drainagenut 10 auf, die sich ausgehend von dem Abfluss 9 für Öl um den Innenumfang des Klemmringes 7 erstreckt. Um das gesammelte Öl abführen zu können, ist gemäß dem dargestellten Ausführungsbeispiel in dem Lageraußenring 1 ein Ablaufkanal 11 gebildet, an den der Abfluss 9 des Klemmringes 7 angeschlossen ist. Durch den Ablaufkanal 11 wird das Öl zu einer Stirnseite des Lageraußenringes 1 geführt. In dem Ausführungsbeispiel weisen die an beiden Seiten des Wälzlagers vorgesehenen Klemmringe 7 einen gemeinsamen, verzweigten Ablaufkanal 11 in dem Lageraußenring 1 auf.

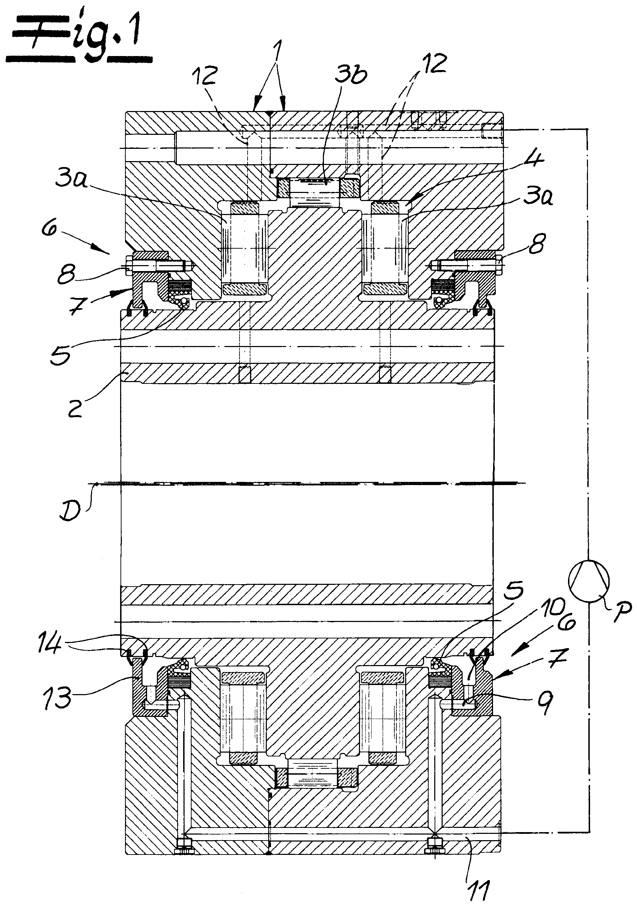

Des Weiteren sind unabhängig von dem Abfluss 9 der Klemmanordnung 6 direkt in den Lagerinnenraum 4 mündende Ölkanäle 12 vorgesehen, mit denen der Lagerinnenraum 4 mit frischem Öl beaufschlagt und auch gespült werden kann. Bei einer solchen Ausgestaltung bietet es sich an, wie in der Fig. 1 dargestellt, Leckageöl von dem Ablaufkanal 11 über eine Pumpe P zurück zu einem der Ölkanäle 12 zu führen, durch welchen Öl dem Lagerinnenraum 4 zugeführt wird.

Aufgrund des erfindungsgemäßen Abflusses 9 der Klemmanordnung 6 kann mit einfachen Mitteln eine Verschmutzung an den Lageraußenseiten durch austretendes Öl vermieden werden. Der Klemmring 7 weist einen radial umlaufenden Steg 13 auf, wobei in axialer Richtung gesehen an beiden Seiten des Steges 13 eine Staubschutzdichtung 14 vorgesehen ist. Um die Dichtwirkung zu verbessern, kann der Zwischenraum zwischen dem Steg 13 und den beiden Staubschutzdichtungen 14 mit Fett gefüllt sein.

Da an dem Klemmring 7 keine aufwändige Abdichtung nach außen notwendig ist, kann dieser auch um den Umfang in Segmente aufgeteilt sein, wodurch sich die Montage und Handhabung gerade bei Großwälzlagern erheblich vereinfacht. Des Weiteren zeigen die Figuren, dass der Lageraußenring 1 und der Lagerinnenring 2 zu ihrer Befestigung in üblicherweise mit Bohrungen versehen sein können.

Um Öl, welches den entsprechenden Wellendichtring 5 überwunden hat, zu dem Abfluss zu leiten, weist der Klemmring 7 eine innenliegend an den Wellendichtring 5 anschließende Drainagenut 10 auf, die sich ausgehend von dem Abfluss 9 für Öl um den Innenumfang des Klemmringes 7 erstreckt. Um das gesammelte Öl abführen zu können, ist gemäß dem dargestellten Ausführungsbeispiel in dem Lageraußenring 1 ein Ablaufkanal 11 gebildet, an den der Abfluss 9 des Klemmringes 7 angeschlossen ist. Durch den Ablaufkanal 11 wird das Öl zu einer Stirnseite des Lageraußenringes 1 geführt. In dem Ausführungsbeispiel weisen die an beiden Seiten des Wälzlagers vorgesehenen Klemmringe 7 einen gemeinsamen, verzweigten Ablaufkanal 11 in dem Lageraußenring 1 auf.

Des Weiteren sind unabhängig von dem Abfluss 9 der Klemmanordnung 6 direkt in den Lagerinnenraum 4 mündende Ölkanäle 12 vorgesehen, mit denen der Lagerinnenraum 4 mit frischem Öl beaufschlagt und auch gespült werden kann. Bei einer solchen Ausgestaltung bietet es sich an, wie in der Fig. 1 dargestellt, Leckageöl von dem Ablaufkanal 11 über eine Pumpe P zurück zu einem der Ölkanäle 12 zu führen, durch welchen Öl dem Lagerinnenraum 4 zugeführt wird.

Aufgrund des erfindungsgemäßen Abflusses 9 der Klemmanordnung 6 kann mit einfachen Mitteln eine Verschmutzung an den Lageraußenseiten durch austretendes Öl auch ohne eine aufwändige Dichtungsanordnung vermieden werden. Dennoch ist es zweckmäßig den Klemmring 7 zumindest in einem gewissen Maße zusätzlich abzudichten, wozu in dem Ausführungsbeispiel der Klemmring 7 einen radial umlaufenden Steg 13 aufweist, wobei in axialer Richtung gesehen an beiden Seiten des Steges 13 eine Staubschutzdichtung 14 vorgesehen ist. Um die Dichtwirkung zu verbessern, kann der Zwischenraum zwischen dem Steg 13 und den beiden Staubschutzdichtungen 14 mit Fett gefüllt sein.

Da an dem Klemmring 7 keine aufwändige Abdichtung nach außen notwendig ist, kann dieser auch um den Umfang in Segmente aufgeteilt sein, wodurch sich die Montage und Handhabung gerade bei Großwälzlagern erheblich vereinfacht. Des Weiteren zeigen die Figuren, dass der Lageraußenring 1 und der Lagerinnenring 2 zu ihrer Befestigung in üblicherweise mit Bohrungen versehen sein können.

## Patentansprüche

1. Ölgeschmiertes Wälzlager für eine horizontale Anordnung der Drehachse (D) mit einer Wellendichtung, die einen Wälzkörper (3a, 3b) aufnehmenden Lagerinnenraum (4) von einer Lageraußenseite trennt, und mit einer von der Lageraußenseite auf die Wellendichtung wirkenden Klemmanordnung (6) zur axialen Fixierung der Wellendichtung, wobei die Klemmanordnung (6) einen Abfluss (9) für Öl aufweist und wobei zumindest eine mit der Klemmanordnung (6) zusammenwirkende Staubschutzdichtung (14) vorgesehen ist, welche den Abfluss (9) von der Lageraußenseite trennt, **dadurch gekennzeichnet, dass** die Klemmanordnung (6) einen radial umlaufenden Steg (13) aufweist, wobei in axialer Richtung gesehen an beiden Seiten des Steges (13) eine Staubschutzdichtung (14) vorgesehen ist.

2. Ölgeschmiertes Wälzlager nach Anspruch 1, **dadurch gekennzeichnet, dass** die Wellendichtung ein Wellendichtring (5) ist.

3. Ölgeschmiertes Wälzlager nach Anspruch 1 oder 2, **dadurch gekennzeichnet, dass** die Klemmanordnung (6) einen Ölsammelraum aufweist, an den der Abfluss (9) anschließt.

4. Ölgeschmiertes Wälzlager nach einem der Ansprüche 1 bis 3, **dadurch gekennzeichnet, dass** die Klemmanordnung (6) von einem Klemmring (7) und Klemmschrauben (8) gebildet ist.

5. Ölgeschmiertes Wälzlager nach Anspruch 4, **dadurch gekennzeichnet, dass** der Klemmring (7) eine innenliegend an die Wellendichtung anschließende Drainagenut (10) aufweist, die sich ausgehend von dem Abfluss (9) für Öl zumindest um einen Teil des Innenumfanges des Klemmrings (7) erstreckt.

6. Ölgeschmiertes Wälzlager nach Anspruch 4 oder 5, **dadurch gekennzeichnet, dass** der Klemmring (7) in Umfangsrichtung gesehen in Klemmringsegmente geteilt ist.

7. Ölgeschmiertes Wälzlager nach einem der Ansprüche 1 bis 6, **dadurch gekennzeichnet, dass** der Abfluss (9) der Klemmanordnung (6) an einen in einem Lagerau βenring (1) des Wälzlagers gebildeten Ablaufkanal (11) angeschlossen ist.

8. Ölgeschmiertes Wälzlager nach Anspruch 7, **dadurch gekennzeichnet, dass** der Ablaufkanal (11) an einer Stirnseite des Lageraußenrings (1) mündet.

9. Ölgeschmiertes Wälzlager nach einem der Ansprüche 1 bis 8, **dadurch gekennzeichnet, dass** eine Transportvorrichtung vorgesehen ist, um das an dem Abfluss (9) abgeführte Öl zurück in den Lagerinnenraum (4) zu leiten.

10. Ölgeschmiertes Wälzlager nach einem der Ansprüche 1 bis 9, **dadurch gekennzeichnet, dass** unabhängig von dem Abfluss (9) der Klemmanordnung (6) direkt in den Lagerinnenraum (4) mündende Ölkanäle (12) vorgesehen sind.

11. Ölgeschmiertes Wälzlager nach einem der Ansprüche 1 bis 10, **dadurch gekennzeichnet, dass** an beiden Lageraußenseiten jeweils eine Wellendichtung und eine Klemmanordnung (6) mit einem Abfluss (9) für Öl vorgesehen sind.

## Claims

1. Oil-lubricated anti-friction bearing for a horizontal arrangement of the rotational axis (D) having a shaft seal which separates a bearing inner space (4), which receives a rolling body (3a, 3b), from a bearing outer side, and having a clamping arrangement (6) which acts on the shaft seal from the bearing outer side in order to fix the shaft seal axially, wherein the clamping arrangement (6) has an outflow (9) for oil and wherein at least one dust protection seal (14) is provided which interacts with the clamping arrangement (6) and separates the outflow (9) from the bearing outer side, **characterized in that** the clamping arrangement (6) has a radially circumferential web (13), a dust protection seal (14) being provided on both sides of the web (13) as viewed in the axial direction.

2. Oil-lubricated anti-friction bearing according to Claim 1, **characterized in that** the shaft seal is a shaft sealing ring (5).

3. Oil-lubricated anti-friction bearing according to Claim 1 or 2, **characterized in that** the clamping arrangement (6) has an oil collecting space which is adjoined by the outflow (9).

4. Oil-lubricated anti-friction bearing according to one of Claims 1 to 3, **characterized in that** the clamping arrangement (6) is formed by a clamping ring (7) and clamping screws (8).

5. Oil-lubricated anti-friction bearing according to Claim 4, **characterized in that** the clamping ring (7) has a drainage groove (10) which adjoins the shaft seal on the inside and, starting from the outflow (9) for oil, extends at least around part of the inner circumference of the clamping ring (7).

6. Oil-lubricated anti-friction bearing according to Claim 4 or 5, **characterized in that** the clamping ring (7) is divided into clamping ring segments as viewed in the circumferential direction.

7. Oil-lubricated anti-friction bearing according to one of Claims 1 to 6, **characterized in that** the outflow (9) of the clamping arrangement (6) is connected to an outflow channel (11) which is formed in a bearing outer ring (1) of the anti-friction bearing.

8. Oil-lubricated anti-friction bearing according to Claim 7, **characterized in that** the outflow channel (11) opens on an end side of the bearing outer ring (1).

9. Oil-lubricated anti-friction bearing according to one of Claims 1 to 8, **characterized in that** a transport apparatus is provided, in order to conduct the oil which is discharged at the outflow (9) back into the bearing inner space (4).

10. Oil-lubricated anti-friction bearing according to one of Claims 1 to 9, **characterized in that** oil channels (12) which open directly into the bearing inner space (4) are provided independently of the outflow (9) of the clamping arrangement (6).

11. Oil-lubricated anti-friction bearing according to one of Claims 1 to 10, **characterized in that** a shaft seal and a clamping arrangement (6) with an outflow (9) for oil are provided in each case on both bearing outer sides.

## Revendications

1. Palier à roulement lubrifié pour un agencement horizontal de l'axe de rotation (D) avec un joint d'arbre séparant un espace intérieur de palier (4) logeant un corps de rouleau (3a, 3b) d'un côté extérieur de palier et avec un agencement de serrage (6) agissant depuis le côté extérieur de palier sur le joint d'arbre pour la fixation axiale du joint d'arbre, l'agencement de serrage (6) présentant un écoulement (9) pour l'huile et au moins un joint antipoussière (14) interagissant avec l'agencement de serrage (6) étant prévu, ce joint séparant l'écoulement (9) du côté extérieur de palier, **caractérisé en ce que** l'agencement de serrage (6) comporte un étai (13) périphérique dans le plan radial, un joint antipoussière (14) étant prévu dans la direction axiale au niveau des deux côtés de l'étai (13).

2. Palier à roulement lubrifié selon la revendication 1, **caractérisé en ce que** le joint d'arbre est une bague d'étanchéité d'arbre (5).

3. Palier à roulement lubrifié selon la revendication 1 ou 2, **caractérisé en ce que** l'agencement de serrage (6) comporte une chambre de collecte d'huile à laquelle l'écoulement (9) est raccordé.

4. Palier à roulement lubrifié selon l'une quelconque des revendications 1 à 3, **caractérisé en ce que** l'agencement de serrage (6) est formé par une bague de serrage (7) et des vis de serrage (8).

5. Palier à roulement lubrifié selon la revendication 4, **caractérisé en ce que** la bague de serrage (7) comporte une rainure de drainage (10) connexe au joint d'arbre reposant à l'intérieur et s'étendant à partir de l'écoulement (9) d'huile au moins autour d'une partie de la périphérie intérieure de la bague de serrage (7).

6. Palier à roulement lubrifié selon la revendication 4 ou 5, **caractérisé en ce que** la bague de serrage (7) est séparée en segments de bague de serrage dans la direction circonférentielle.

7. Palier à roulement lubrifié selon l'une quelconque des revendications 1 à 6, **caractérisé en ce que** l'écoulement (9) de l'agencement de serrage (6) est raccordé à un canal d'évacuation (11) formé dans une bague de palier extérieure (1) du palier à roulement.

8. Palier à roulement lubrifié selon la revendication 7, **caractérisé en ce que** le canal d'évacuation (11) débouche au niveau d'un côté avant de la bague de palier extérieure (1).

9. Palier à roulement lubrifié selon l'une quelconque des revendications 1 à 8, **caractérisé en ce qu'**un dispositif de transport est prévu, pour ramener l'huile évacuée au niveau de l'écoulement (9) dans l'espace intérieur de palier (4).

10. Palier à roulement lubrifié selon l'une quelconque des revendications 1 à 9, **caractérisé en ce qu'**indépendamment de l'écoulement (9) de l'agencement de serrage (6), des canaux d'huile (12) débouchant directement dans l'espace intérieur de palier (4) sont prévus.

11. Palier à roulement lubrifié selon l'une quelconque des revendications 1 à 10, **caractérisé en ce qu'**un joint d'arbre et un agencement de serrage (6) avec un écoulement (9) d'huile sont respectivement prévus au niveau des deux côtés extérieurs de palier.
